Europäisches Patentamt

(19) **European Patent Office**

**Office européen des brevets**

(11) Publication number: **0 045 134**
**B1**

(12) **EUROPEAN PATENT SPECIFICATION**

(45) Date of publication of patent specification: **25.04.84**

(51) Int. Cl.³: **C 04 B 35/71, C 04 B 35/56**

(21) Application number: **81302875.0**

(22) Date of filing: **25.06.81**

(54) **A composite material of silicon carbide and silicon and method of producing the material.**

(30) Priority: **17.07.80 US 169687**

(43) Date of publication of application:
**03.02.82 Bulletin 82/5**

(45) Publication of the grant of the patent:
**25.04.84 Bulletin 84/17**

(84) Designated Contracting States:
**DE FR GB IT SE**

(56) References cited:
**EP - A - 0 005 632**
**DE - B - 1 213 619**
**GB - A - 1 562 504**
**GB - A - 2 037 263**
**US - A - 3 035 325**
**US - A - 3 459 842**
**US - A - 4 154 787**
**US - A - 4 240 835**

**AMERICAN CERAMIC SOCIETY BULLETIN, vol. 54, no. 12, December 1975, Columbus, Ohio, US W.B. HILLIG et al. "Silicon/silicon carbide composites", pages 1054-1056**

(73) Proprietor: **KENNECOTT CORPORATION**
**Ten Stamford Forum**
**Stamford Connecticut 06905 (US)**

(72) Inventor: **Frechette, Francis Joseph**
**122 Kingsbury Lane**
**Town of Tonawanda New York 14150 (US)**
Inventor: **Mc Dowell, Douglas James**
**465 - 22nd Street**
**Niagara Falls New York 14303 (US)**
Inventor: **Kasprzyk, Martin Richard**
**2648, Ransomville Road**
**Ransomville New York 14131 (US)**
Inventor: **Zanghi, Joseph Salvatore**
**123 Kettering Drive**
**Buffalo New York 14223 (US)**

(74) Representative: **Atkinson, Peter Birch et al,**
**Marks & Clerk Scottish Life House Bridge Street**
**Manchester M3 3DP (GB)**

Courier Press, Leamington Spa, England.

A composite material of silicon carbide and silicon and method of producing the material

The present invention relates to a composite material of particulate silicon carbide in a substantially continuous matrix of silicon. The present compositions are useful in fabricating articles which have high strength and high thermal shock resistance. The composite material is non-porous and relatively light in weight, having densities in the order of 2.6 to 2.8 g/cc, as compared to silicon carbide and alumina ceramic materials which have densities in the order of 3.1 to 3.7 g/cc, respectively. The composites are aptly suited to use in the fabrication of components for turbine engines, components for internal combustion engines, and turbochargers.

Silicon carbide, a crystalline compound of silicon and carbon, has long been known for its hardness, its strength and its excellent resistance to oxidation and corrosion. Silicon carbide has a low coefficient of expansion, good heat transfer properties and maintains high strength at elevated temperatures. In recent years, the art of producing high density silicon carbide bodies from silicon carbide powders has been developed. Methods include reaction sintering, hot pressing and pressureless sintering (initially forming the article and subsequently sintering under substantially pressureless conditions). The high density silicon carbide bodies so produced are excellent engineering materials and find utility in fabrication of components for turbines, heat exchange units, pumps, and other equipment or tools that are exposed to severe wear and/or operation under high temperature conditions.

The reaction sintering process, also called the reaction bonding process, is typically carried out by forming silicon carbide in situ by the reaction of silicon and carbon in a porous body of silicon carbide. In such processes, particulate silicon carbide is initially mixed with particulate carbon or a carbon source material. The mixture is then formed into a green body of the desired shape. Frequently, the initial mixture includes a binder, such as a thermosetting resin material, to add strength to the green body and also as a carbon source material. The green body may be baked at temperatures to set and pyrolize the binder. The shaped green body is impregnated, or infiltrated, typically by immersing the body in molten silicon at temperatures ranging from about 1400° to about 2300°C. The silicon reacts with the available carbon in the green body to form silicon carbide. Usually, the amount of carbon in the green body is less than the stoichiometric amount needed to combine with the added silicon. Thus, reaction sintered silicon carbide products typically contain from about 10 to about 25 percent by volume of free silicon.

Articles of silicon-silicon carbide mixtures wherein the silicon carbide is not formed in situ are also known in the prior art. Typically, such articles are produced by initially forming a porous body of particulate silicon carbide and subsequently impregnating the body with molten silicon at temperatures between about 1400° and about 2300°C. Such articles usually contain from about 10 to about 60 percent by weight silicon. Examples of such processes and articles are found in U.S. Patent Nos. 1,012,531; 1,030,327; 1,906,963; 2,242,482, and 3,459,842. For example, this latter patent describes a process in which particulate silicon is mixed with silicon carbide whiskers with a length of 100 to 1000 $\mu$m and a diameter of 1 to 10 $\mu$m and the mixture is heated to a temperature slightly above the melting point of the silicon.

U.K. Patent Specification 2,037,263 describes a method of making silicon carbide-silicon matrix composite articles in which a shaped carbon fibre structure is infiltrated with molten silicon. The resultant product may comprise aligned silicon carbide crystals surrounded by a matrix of silicon.

European Patent Specification 0,005,632 describes a process for forming a coating on an article by plasma spraying. The coating is produced by plasma spraying onto the article a composition comprising a mixture of particulate silicon carbide and particulate silicon. The resultant coating comprises a mixture of silicon and beta-silicon carbide and preferably comprises 15 to 70% by volume of the silicon carbide.

It has now been found that essentially non-porous, strong composite materials, having properties not possessed by prior art composite materials of similar composition may be produced from mixtures of silicon and silicon carbide.

According to the present invention there is provided a non-porous silicon and silicon carbide composite material article comprising 40 to 60% by volume of silicon carbide characterised in that the silicon carbide is in particulate form with a maximum particle size of less than 5 $\mu$m and in that the particulate silicon carbide is in a substantially continuous matrix of silicon.

The silicon carbide component may suitable be selected from alpha or beta phase silicon carbide. Mixtures of alpha and beta phase material may be utilized. The silicon carbide starting material of the present invention does not require separation or purification of phases to obtain a suitable material. Minor amounts of amorphous silicon carbide may be included without deleterious effect.

The silicon carbide component is utilized in ultra finely-divided form. A suitable finely-divided material may be produced by grinding, ball milling or jet milling larger particles of silicon carbide and subsequently classifying or separating a component suited to use in the present invention. Preferably the silicon carbide starting material has an average particle size of 0.10 to 2.50 $\mu$m, and more preferably, less than 1.0 $\mu$m. It is difficult to obtain accurate particle size distribution for silicon carbide powders having a size less than about 1 $\mu$m in size and therefore, surface area may be considered relevant in determining suitable material. Accordingly the preferred silicon carbide particles for use in the present powders have a surface area of from 1 to 100 m²/g. Within this range, it is more preferred that the surface area of the particles range between 2 and 50 m²/g, and, within that range, a range from 2 to 20 m²/g has been found eminently useful.

The silicon carbide and the silicon components may contain minor amounts of impurities, such as iron, calcium, magnesium and aluminium, without deleterious effect on the product.

The present composite materials are characterised, and may be distinguished over the prior art, by the fact that the finely-divided silicon carbide particles are distributed in a substantially continuous matrix of silicon. The prior art silicon carbide and silicon composite articles are typically produced by utilizing mixtures of various sized silicon carbide particles to obtain a "packing mixture". The mixture is then pressed to obtain a porous green body of the desired shape, and subsequently the porous body is impregnated with molten silicon. The result is composite material which is essentially non-porous (i.e., containing less than 0.1% voids) containing a phase of silicon carbide impregnated with a substantially continuous phase of silicon.

It is postulated that the present composite materials are obtained by the utilization of a starting material of very finely-divided silicon carbide, preferably of submicron size, and are produced by the silicon phase wetting and substantially surrounding each individual silicon carbide particle.

The articles of the invention may be produced by a method comprising forming a green body of particulate silicon carbide and impregnating the green body with molten silicon characterised in that the particulate silicon carbide has a maximum size of 5 $\mu$m and that the body is impregnated with sufficient molten silicon in the absence of any substantial amount of carbon to form a silicon carbide and silicon composite material article containing 40 to 60 percent by volume of the silicon carbide in a substantially continuous matrix of silicon. The forming or shaping process is suitably carried out using known techniques, for example, by injection molding, compression molding, slip casting, blow molding, vacuum forming or by extrusion. The shaped green body is subsequently impregnated with silicon. The impregnation step takes place in the absence of any substantial amount of carbon. A binder may be added to the silicon carbide starting material. Usually, amounts between 1.0 and 25.0 percent by weight are employed, the amount of temporary binder varying widely, depending on the forming method used. Thermoplastic resins, such as polystyrene, polyethylene or acrylic resins are particularly useful as binders. Such thermoplastic resin materials decompose at temperatures well below the temperature of the impregnation step and leave no carbon residue.

The impregnation step may be carried out by simply covering the porous green body with powdered silicon metal and heating, allowing impregnation to occur by capillary action or alternatively, may be carried out by immersion or vapor infiltration techniques. However, in the preferred embodiment, the porous green body is surrounded with powdered silicon metal, placed in a vacuum furnace, and, while under vacuum heated to above the melting point of silicon. Usually, partial vacuums (between 0.01 and 0.5 mmHg absolute pressure) are suitably employed. Silicon melts at about 1410°C. However, temperatures up to about 2300°C, or the vaporisation point of silicon may be employed. Particularly useful are temperatures between 1500° and 2000°C.

The composite materials produced by the present compositions have physical properties which are highly desirable in ceramic materials. The composites have flexural strengths of over 620 N mm$^{-2}$ (90,000 psi) at 1100°C, a characteristic useful in the fabrication of engine components used or operated at elevated temperatures. The composites have an elastic modulus of 262×10³ N mm$^{-2}$ (38 million psi) or less at room temperature, a characteristic useful in providing the composites with a high resistance to thermal shock and thermal stresses. The composites have densities between about 2.6 and 2.8 g/cc, as compared to 3.15 g/cc for pure sintered silicon carbide, a characteristic useful in the fabrication of armors, turbine blades, rotors and components for valve trains where strength and low weight are advantageously employed. The composites exhibit a plastic deformation at high temperatures, a characteristic allowing them to be less sensitive to small flaws than other ceramic materials which are brittle at high temperatures. The present composites exhibit no measurable shrinkage from the green body dimensions through the impregnation step, facilitating the molding of intricate shaped green bodies and recovering a hardened composite of the same shape and dimensions.

The invention will now be described in greater detail partly with reference to the following examples, which are intended to illustrate, and not to limit the scope of the invention. In the following examples, all parts are parts by weight, and all temperatures are in degrees Centigrade.

Examples I—III

Prior art

Example I

100 Parts of particulate silicon carbide having an average particle size of 5.2 $\mu$m, ranging between about 2.0 and about 10.0 $\mu$m, was mixed with 20.0 parts of polyphenylene resin binder dissolved in acetone, in a paddle blender for four hours. After drying, the mixture was hammer milled and screened through a 106 $\mu$m screen. The mixture was then warm compression molded into 15 bars about 5 cm in length, 3 mm in thickness and 6 mm in width, using a metal mold at a pressure of about 280 kg/cm². The bars were then placed in an oven and heated to a temperature of 1000°C to pyrolize the resin binder. The bars were next surrounded with a mixture of powdered silicon metal mixed with minor amounts of carbon and phenolic resin. The carbon and phenolic resin in the cover mixture do not enter into the impregnation reaction. They are utilized to make the cover residue more friable and to facilitate its removal after the heating step. The bars and surrounding cover mixture were then placed in a vacuum furnace and the chamber was evacuated to a pressure of about $10^{-2}$ mmHg absolute. The furnace temperature was raised to about 1700°C, well above the melting point of silicon. At this temperature, the pyrolized carbon in the bars underwent a reaction with the infiltrating molten silicon to form reaction bonded silicon carbide. The bars were then removed from the furnace, cooled, cleaned of residue and weighed. The average density of the impregnated bars was found to be 2.98 g/cc, ranging from 2.95 g/cc to 2.99 g/cc. When tested on a MIS testing machine, the bars were found to have an average flexural strength of 458 N mm$^{-2}$ (66,500 pounds per square inch— reported for convenience as 66.5 ksi), ranging from 413—480 N mm$^{-2}$ (59.8 to 69.6 ksi), at 1100°C, using a four point bending fixture. The bars were found to have an elastic modulus of $332 \times 10^3$ N mm$^{-2}$ ($48 \times 10^6$ psi) when measured on a sonic modulus tester at room temperature. After the heating step, the bars were found to have a linear shrinkage between 0.5 and 2.0 percent, with an average of 1.1 percent. The product was found to contain 26 percent by volume silicon with the silicon carbide component having an average grain size of 5.2 $\mu$m, ranging between about 2.0 and 15.0 $\mu$m. The bars, and those in Examples II and III, ruptured during the flexural strength test. This example is shown in Table A below as Example I.

Example II

Example II was prepared using the same procedure, equipment and techniques as described in Example I except that the starting and resulting final densities and volume percent silicon were varied. The results are shown in Table A.

Example III

Example III is a dry cast system in which particulate silicon carbide having an average particle size of 100.0 $\mu$m, ranging from 70.0 to 140.0 $\mu$m, was mixed with a phenolic resin in acetone, dried, and cast into a metal mold in the absence of measurable pressure. After casting, the formed body was cured in the metal mold to set the resin. Subsequent processing utilized the same procedures, equipment and techniques as described in Examples I and II above. The results are shown in Table A.

Example IV—V

The invention

Example IV

78.5 Parts of silicon carbide having an average particle size of 0.70 $\mu$m, ranging between about 0.1 and about 5.0 $\mu$m, were mixed with 21.5 parts of polystyrene resin in a heated sigma blade mixer and the mixture was injection molded into bars of the same size as in Example I. The bars were then placed in a ceramic box and baked slowly to 800°C to remove the resin. They were then covered with a mixture of silicon metal, carbon and a phenolic resin as in Example I and heated in a vacuum furnace using the same procedure, equipment and techniques as described in Example I. After cooling, the bars were removed from the furnace and cleaned of residue. The 11 bars were tested as in Example I and were found to have an average density of 2.79 g/cc, ranging from 2.75 to 2.80 g/cc. When tested on a MIS testing machine, the bars were found to have an average flexural strength of 91.0 ksi, ranging from 450—930 N mm$^{-2}$ (65.0 to 135.0 ksi), at 1100°C, using a four point bending fixture. The bars were found to have an elastic modulus of $262 \times 10^3$ N mm$^{-2}$ ($38 \times 10^6$ psi) when tested on a sonic modulus machine at room temperature. After the heating step, the bars were found to have sustained substantially no shrinkage. The product was found to contain 58 percent by volume silicon with the silicon carbide component having an average grain size of 0.70 $\mu$m, ranging from 0.1 to 5.0 $\mu$m. The bars, and also the bars in Example V, were found to deform in the flexural strength test at 1100°C, with no visible signs of cracking. This example is shown in Table A below as Example IV.

Example V

Example V was prepared using the same procedures, equipment and techniques as described in Example IV, except that the starting and final densities were varied. The results are also shown in Table A.

It will be appreciated that the present invention is not to be construed as limited to the specific examples and embodiments given in the foregoing.

# 0 045 134

TABLE A

| Example | 1100°C Flexural strength (N mm$^{-2}$) | | | Elastic modulus ($\times 10^3$ N mm$^{-2}$) | Density (g/cc) | | |
|---|---|---|---|---|---|---|---|
| | Low | Avg. | High | | Low | Avg. | High |
| I | 413 | 458 | 480 | 317 | 2.95 | 2.98 | 2.99 |
| II | 368 | 511 | 753 | 317 | 2.82 | 2.84 | 2.87 |
| III | 87 | 113 | 125 | 317 | 2.69 | 2.75 | 2.85 |
| IV | 582 | 629 | 732 | 262 | 2.75 | 2.79 | 2.80 |
| V | 450 | 663 | 935 | 262 | 2.66 | 2.74 | 2.76 |

| Example | % Linear shrinkage | | | SiC Grain size ($\mu$m) | | | Volume % silicon | Sample quantity |
|---|---|---|---|---|---|---|---|---|
| | Low | Avg. | High | Low | Avg. | High | | |
| I | 0.5 | 1.1 | 2.0 | 2.0 | 5.2 | 15.0 | 26 | 15 |
| II | 0.5 | 1.1 | 2.0 | 2.0 | 5.2 | 15.0 | 42 | 15 |
| III | 0.5 | 1.1 | 2.0 | 70.0 | 100.0 | 140.0 | 52 | 15 |
| IV | | 0 | | 0.1 | 0.7 | 5.0 | 58 | 11 |
| V | | 0 | | 0.1 | 0.7 | 5.0 | 58 | 15 |

## Claims

1. An essentially non-porous silicon and silicon carbide composite material article comprising 40 to 60% by volume of silicon carbide characterised in that the silicon carbide is in particulate form with a maximum particle size of less than 5 $\mu$m and in that the particulate silicon carbide is in a substantially continuous matrix of silicon.

2. An article as claimed in claim 1 characterised in that the particles of the silicon carbide component have surface areas ranging between 1 and 100 m²/g.

3. An article as claimed in claim 2 characterised in that the particles of the silicon carbide component have surface areas ranging between 2 and 50 m²/g.

4. An article as claimed in claim 3 characterised in that the particles of the silicon carbide component have surface areas ranging between 2 and 20 m²/g.

5. A method of producing a non-porous silicon carbide and silicon composite material article comprising forming a green body of particulate silicon carbide and impregnating the green body with molten silicon characterised in that the particulate silicon carbide has a maximum size of 5 $\mu$m and that the body is impregnated with sufficient molten silicon in the absence of any substantial amount of carbon to form a silicon carbide and silicon composite material article containing 40 to 60 percent by volume of the silicon carbide in a substantially continuous matrix of silicon.

6. A method as claimed in claim 5 characterised in that the particles of the silicon carbide component have surface areas ranging from 1 to 100 m²/g.

7. A method as claimed in claim 6 characterised in that the particles of the silicon carbide component have surface areas ranging from 2 to 50 m²/g.

8. A method as claimed in claim 7 characterised in that the particles of the silicon carbide component have surface areas ranging from 2 to 20 m²/g.

9. A method as claimed in any one of claims 5 to 8 characterised in that a thermoplastic resin is utilized to aid in shaping the green body.

10. A method as claimed in any one of claims 5 to 9 characterised in that the impregnation with molten silicon is carried out in a partial vacuum.

11. A method as claimed in any one of claims 5 to 10 characterised in that impregnation with molten silicon is carried out at temperatures between 1400° and 2300°C.

## Patentansprüche

1. Im wesentlichen nicht-poröser Verbundstoffartikel aus Silicium und Siliciumkarbid mit 40 bis 60 Volumenprozenten Siliciumkarbid dadurch gekennzeichnet, daß das Siliciumkarbid in Teilchenform mit einer maximalen Teilchengröße von weniger als 5 $\mu$m vorliegt, und daß das teilchenförmige Siliciumkarbid in einer im wesentlichen kontinuierlichen Siliciummatrix enthalten ist.

2. Artikel nach Anspruch 1, dadurch gekennzeichnet, daß die Teilchen der Siliciumkarbid-Komponente Oberflächen im Bereich von 1 bis 100 m²/g haben.

3. Artikel nach Anspruch 2, dadurch gekennzeichnet, daß die Teilchen der Siliciumkarbid-Komponente Oberflächen im Bereich von 2 bis 50 m²/g haben.

4. Artikel nach Anspruch 3, dadurch gekennzeichnet, daß die Teilchen der Siliciumkarbid-Komponente Oberflächen im Bereich von 2 bis 20 m²/g haben.

5

5. Verfahren zur Herstellung eines nicht-porösen Verbundstoffartikels aus Silicium-karbid und Silicium mit den Verfahrensschritten des Formens eines Rohkörpers aus teilchenförmigem Siliciumkarbid und des Imprägnierens des Rohkörpers mit ge-schmolzenem Silicium, dadurch gekenn-zeichnet, daß das teilchenförmige Silicium-karbid eine maximale Größe von 5 μm hat, und daß der Körper mit ausreichendem geschmolzenen Silicium in Abwesenheit einer wesentlichen Menge von Kohlenstoff imprägniert wird, um einen Verbundstoffartikel aus Siliciumkarbid und Silicium mit 40 bis 60 Volumenprozenten Siliciumkarbid in einer im wesentlichen kontinuierlichen Siliciummatrix zu formen.

6. Verfahren nach Anspruch 5, dadurch gekennzeichnet, daß die Teilchen der Siliciumkarbid-Komponente Oberflächen im Bereich von 1 bis 100 m²/g haben.

7. Verfahren nach Anspruch 6, dadurch gekennzeichnet, daß die Teilchen der Siliciumkarbid-Komponente Oberflächen im Bereich von 2 bis 50 m²/g haben.

8. Verfahren nach Anspruch 7, dadurch gekennzeichnet, daß die Teilchen der Siliciumkarbid-Komponente Oberflächen im Bereich von 2 bis 20 m²/g haben.

9. Verfahren nach irgendeinem der Ansprüche 5 bis 8, dadurch gekennzeichnet, daß ein thermoplastisches Harz verwendet wird, um die Formung des Rohkörpers zu unterstützen.

10. Verfahren nach irgendeinem der Ansprüche 5 bis 9, dadurch gekennzeichnet, daß die Imprägnierung mit geschmolzenem Silicium in einem Teilvakuum durchgeführt wird.

11. Verfahren nach irgendeinem der Ansprüche 5 bis 10, dadurch gekennzeichnet, daß die Imprägnierung mit geschmolzenem Silicium bei Temperaturen zwischen 1400° und 2300°C durchgeführt wird.

**Revendications**

1. Article en matériau composite au silicium et au carbure de silicium essentiellement non poreux, comprenant 40 à 60% en volume de carbure de silicium, caractérisé en ce que le carbure de silicium est sous la forme de particules, avec un diamètre maximal des particules de moins de 5 μm, et en ce que le carbure de silicium en particules se trouve dans une matrice de silicium quasi continue.

2. Article suivant la revendication 1, caractérisé en ce que les particules de carbure de silicium ont des surfaces spécifiques de 1 à 100 m²/g.

3. Article suivant la revendication 2, caractérisé en ce que les particules de carbure de silicium ont des surfaces spécifiques de 2 à 50 m²/g.

4. Article suivant la revendication 3, caractérisé en ce que les particules de carbure de silicium ont des surfaces spécifiques de 2 à 20 m²/g.

5. Procédé de production d'un article en matériau composite au carbure de silicium et au silicium non poreux, comprenant la formation d'un corps vert de carbure de silicium en particules et l'imprégnation du corps vert de silicium fondu, caractérisé en ce que le carbure de silicium en particules a un diamètre maximal de 5 μm et en ce que le corps est imprégné d'une quantité suffisante de silicium fondu en l'absence de toute quantité notable de carbone pour former un article en matériau composite au carbure de silicium et au silicium contenant 40 à 60% en volume du carbure de silicium dans une matrice quasi continue de silicium.

6. Procédé suivant la revendication 5, caractérisé en ce que les particules du carbure de silicium ont des surfaces spécifiques de 1 à 100 m²/g.

7. Procédé suivant la revendication 6, caractérisé en ce que les particules du carbure de silicium ont des surfaces spécifiques de 2 à 50 m²/g.

8. Procédé suivant la revendication 7, caractérisé en ce que les particules du carbure de silicium ont des surfaces spécifiques de 2 à 20 m²/g.

9. Procédé suivant l'une quelconque des revendications 5 à 8, caractérisé en ce qu'une résine thermoplastique est utilisée pour faciliter le formage du corps vert.

10. Procédé suivant l'une quelconque des revendications 5 à 9, caractérisé en ce que l'imprégnation avec du silicium fondu est effectuée sous un vide partiel.

11. Procédé suivant l'une quelconque des revendications 5 à 9, caractérisé en ce que l'imprégnation avec du silicium fondu est effectuée a des températures comprises entre 1400° et 2300°C.